Europäisches Patentamt

European Patent Office

Office européen des brevets

(11) Veröffentlichungsnummer: **0 665 691 A2**

## (12) EUROPÄISCHE PATENTANMELDUNG

(21) Anmeldenummer: **95100372.2**

(22) Anmeldetag: **12.01.95**

(51) Int. Cl.6: **H04N 7/24**

(30) Priorität: **26.01.94 DE 4402263**

(43) Veröffentlichungstag der Anmeldung:
**02.08.95 Patentblatt 95/31**

(84) Benannte Vertragsstaaten:
**CH DE ES FR GB IT LI NL SE**

(71) Anmelder: **SIEMENS AKTIENGESELLSCHAFT**
**Wittelsbacherplatz 2**
**D-80333 München (DE)**

(72) Erfinder: **Seytter, Fritz, Dipl.-Ing.**
**Tal 39 IIV**
**D-80331 München (DE)**

(54) Verfahren zur Minimierung der zeitlichen Verzögerung bei der Übertragung bewegter Bilder mit niedrigen Datenraten.

(57) Teilbilder zu wechselnden Bildausschnitten eines zu übertragenden Bildbereichs werden auf Seiten eines Senders codiert, über einen Übertragungskanal übertragen und auf Seiten eines Empfängers decodiert. Übertragene Teilbilder werden nach ihrer Decodierung zur teilweisen Aktualisierung eines wiedergegebenen Bildes verwendet, indem diese Teilbilder sofort in das wiedergegebene Bild entsprechend ihrem jeweiligen Bildausschnitt eingesetzt werden und dort früher übertragene, ältere Teilbilder ersetzen. Die zur Übertragung eines Teilbildes benötigte Zeit ist ein Bruchteil der zur Übertragung eines ganzen Bildes benötigten Zeit. Die zeitliche Verzögerung für jedes Teilbild wird entsprechend verringert.

FIG 4

Die Erfindung betrifft ein Verfahren zur Minimierung der zeitlichen Verzögerung bei der Übertragung bewegter Bilder mit niedrigen Datenraten. In verschiedenen Bereichen der Technik, z.B. in der Bildtelefonie oder bei anderen Anwendungen der Bewegtbildübertragung, werden Bewegtbilder mit einem Bildsensor aufgenommen, mit niedrigen Datenraten komprimiert und an ein Wiedergabegerät übertragen. So werden bewegte Bilder üblicherweise von Kameras mit einer Bildfrequenz von z.B. 25 Hz aufgenommen und auch auf einem Wiedergabegerät, z.B. einem Monitor, mit dieser Bildfrequenz wiedergegeben. Zu Zwecken der Übertragung über Kanäle, die eine solche hohe Datenrate nicht übertragen können, werden diese aber häufig komprimiert und anschließend vor der Wiedergabe dekomprimiert. Zur Ausführung dieser Datenverarbeitungsvorgänge, die mit der Datendekompression bzw. -dekodierung oder auch mit der -kompression oder -kodierung zusammenhängen, ist meist mehr Zeit erforderlich, als bei der gegebenen Bildaufnahme- bzw. Wiedergabefrequenz tatsächlich zur Verfügung steht.

Da üblicherweise nur ganze Bilder wiedergegeben werden, ist das Wiedergabegerät gezwungen, Bilder mehrmals zu wiederholen oder seine Wiedergabefrequenz der Übertragungsbildfrequenz anzupassen. Es kommt also zu einer zeitlichen Unterabtastung und den damit verbundenen zeitlichen Verzögerungen zwischen der Aufnahme und der Wiedergabe von Bildern, die - je nach Anwendungsfall - zu mehr oder weniger störenden Verfälschungen der Wiedergabe von Bewegungsvorgängen führen.

Der Erfindung liegt die Aufgabe zugrunde, ein Verfahren zur Minimierung der zeitlichen Verzögerung bei der Übertragung bewegter Bilder mit niedrigen Datenraten anzugeben, mit dem diese störenden Verfälschungen und zeitlichen Verzögerungen nach Möglichkeit vermieden werden können. Insbesondere soll beim Betrachter der Eindruck möglichst kontinuierlicher Bewegungsvorgänge entstehen, und die zeitlichen Verzögerungen zwischen der Aufnahme und der Wiedergabe von Bildern sollen minimiert werden.

Diese Aufgabe wird erfindungsgemäß durch ein Verfahren zur Minimierung der zeitlichen Verzögerung bei der Übertragung bewegter Bilder mit niedrigen Datenraten mit Merkmalen nach Anspruch 1 gelöst. Teilbilder zu wechselnden Bildausschnitten eines zu übertragenden Bildbereichs werden auf Seiten eines Senders codiert, über einen Übertragungskanal übertragen und auf Seiten eines Empfängers decodiert. Übertragene Teilbilder werden nach ihrer Decodierung zur teilweisen Aktualisierung eines wiedergegebenen Bildes verwendet, indem diese Teilbilder sofort in das wiedergegebene Bild entsprechend ihrem jeweiligen Bildausschnitt eingesetzt werden und dort früher übertragene, ältere Teilbilder ersetzen. Die zur Übertragung eines Teilbildes benötigte Zeit ist ein Bruchteil der zur Übertragung eines ganzen Bildes benötigten Zeit. Die zeitliche Verzögerung für jedes Teilbild wird entsprechend verringert.

Figur 1 zeigt ein Schema einer Bewegtbildübertragung bei der Bildtelefonie.

Figur 2 zeigt in schematischer Weise die Entstehung zeitlicher Verzögerungen durch die Quellcodierung bei der bildbasierten Codierung und Übertragung bewegter Bilder.

Figur 3 zeigt in schematischer Weise die Entstehung zeitlicher Verzögerungen durch die Quellcodierung bei der blockbasierten Codierung und Übertragung bewegter Bilder.

Figur 4 zeigt in schematischer Weise die zeitlichen Verzögerungen durch die Quellcodierung bei der block-basierten, teilbildweisen Codierung und Übertragung bewegter Bilder gemäß der Erfindung.

Im folgenden wird die Erfindung anhand bevorzugter Ausführungsbeispiele und mit Hilfe der Figuren näher beschrieben.

Zur Übertragung von Bewegtbildern bei Datenraten kleiner als 32 kBit pro Sekunde muß mit einer verminderten zeitlichen Auflösung gearbeitet werden. Da am Empfänger üblicherweise nur vollständige Bilder wiedergegeben werden, erhöht sich die Verzögerung zwischen Bildaufnahme und Bildwiedergabe so sehr, daß sie für die Bildkommunikation, z. B. für die Bildtelefonie, störend wirkt.

Bislang wurde diese Verzögerung in Kauf genommen. Übliche Videokameras und Bildschirme arbeiten mit Bildfrequenzen von mindestens 25 Hertz. Werden nun gemäß der vorliegenden Erfindung lediglich Teile eines Bildes mit hoher Bildfrequenz übertragen, so daß jedes Bildelement nach der durch die verminderte zeitliche Auflösung geforderten Zeit wieder zum übertragenen Teil des Bildes gehört, so ist einerseits die Forderung nach zeitlicher Unterabtastung erfüllt, andererseits vermindert sich die Verzögerung durch die erhöhte Bildfrequenz der Übertragung. Dies läßt sich durch ein konkretes Beispiel illustrieren, bei dem die Bildfrequenz der Kamera und des Bildschirms gleich 25 Hertz ist, die Bildfrequenz des Coders, der zur Kompression der zu übertragenen Bilddaten verwendet wird, dagegen 5 Hertz beträgt. Jedes Bild wird in fünf gleich große Teile zerlegt. Die Teile werden zyklisch mit einer Bildfrequenz von 25 Hertz codiert. Nach fünf codierten Teilen wird dann wieder der gleiche Bildausschnitt codiert. Die Bildfrequenz für jeden Bildausschnitt beträgt dann 5 Hertz.

Gemäß der Erfindung wird jeder neu übertragene Bildausschnitt im Empfänger sofort in das vorhandene Bild eingesetzt und mit einer Bildfrequenz von 25 Hertz wiedergegeben. Die zeitliche Verzögerung für jeden Bildausschnitt ist jetzt minimal, da dessen Übertragung nur ein Fünftel der Übertragungszeit für ein ganzes Bild benötigt.

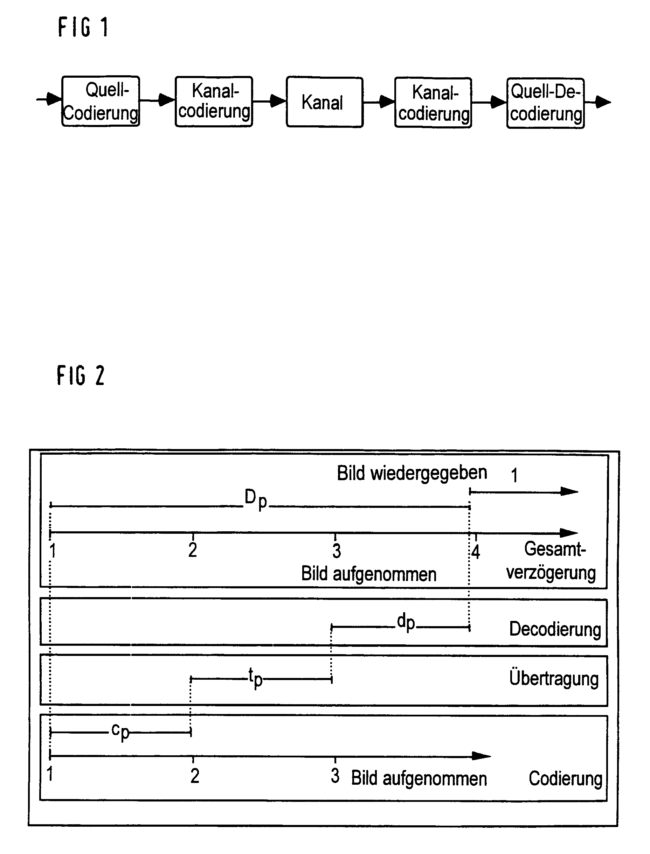

Fig. 1 zeigt die typischen Zeitverzögerungen bei einer Online-Videoübertragung. Im Rahmen der Quellcodierung treten algorithmische Verzögerungen, und Speicherungsverzögerungen auf, die durch den Algorithmus und die damit zusammenhängenden Berechnungen bedingt sind. Die Speicherungsverzögerungen sind unvermeidlich um die Codierungsparameter den wechselnden Charakteristiken einer Szene anpassen zu können, was normaler Weise mit Hilfe eines hierzu geeigneten Kontrollmechanismus geschieht. Diese Verzögerungen sind direkt abhängig von der Größe des Speichers und können in weiten Grenzen variieren in Abhängigkeit von der Art und Weise der Steuerung des Coders: Bei Verwendung einer rein vorwärts gerichteten Steuerung kann die Speichergröße relativ klein sein im Vergleich zu einer rückgekoppelten Steuerung. Falls es möglich ist den Datenstrom des Quellcodierers ohne Erzeugung lokaler Effekte zu zerschneiden, ist eine Speicherung nicht nötig. Dies kann z. B. durch Verwendung einer UVLC-Technik [2] erreicht werden, bei der die Entropiecodierung und die Quantisierung im Rahmen eines bit-ebenen Codierungsschemas kombiniert werden.

Verzögerungen durch Fehlerberichtigung und Signalausbreitung hängen stark von dem verwendeten Übertragungskanal ab [5]. Eine terrestrische ISDN-Verbindung hat typischerweise niedrige Verzögerungen wogegen Satellitenverbindungen normalerweise Verzögerungen um 200 ms bedingen. Bei der mobilen Kommunikation erzeugen verschiedene Verschränkungsverfahren (interleaving) lange Verzögerungen, die durch die Behandlung von speziellen Übertragungsfehlern (burst-errors) bedingt sind. So ist z. B. bei einer Videoübertragung über ein DECT (Digital European Cordless Telephone), einem drahtlosen Telefonstandard der die Übertragung von ungeschützten Sprachdaten mit 32 kBit pro Sekunde über einen 1,8 GHz Kanal erlaubt [3], eine durch Interleaving bedingte Verzögerung von ca. 100 ms unvermeidlich [4].

Zeitverzögerungen durch Zwischenspeicherung, Fehlerkorrektur und Signalausbreitung können im allgemeinen als konstant angesehen werden. Sie werden in den nachfolgenden Betrachtungen vernachlässigt und das Augenmerk wird stattdessen auf einige Aspekte der durch die Quellcodierung bedingten Zeitverzögerungen gerichtet.

Diese durch die Quellcodierung bedingten Zeitverzögerungen hängen von dem verwendeten Kompressionsalgorithmus und der verwendeten Hardware ab. Dabei kann man annehmen kann, daß - wenigstens bei kostengünstigen Implementierungen - die Rechenleistung so gewählt ist, daß die Ruhezeit (Idletime) eine bestimmte Sicherheitsgrenze nicht übersteigen wird, weil anderenfalls die Rechenleistung dadurch verschwendet würde, daß die Hardware zulange auf nachfolgende zu codierende Daten warten würde. Unter dieser Annahme werden zwei Klassen von Algorithmen betrachtet:

a) Bild-basierte Codierung (neue "fortgeschrittene" Methoden, z. B. Analyse-/Sypthesecodierung [6])

b) Block-basierte Codierung (traditionelle Techniken, existierende Standards [7, 8, 9]).

Bei der Bild-basierten Codierung wird ein ganzes Bild (Frame) verarbeitet bevor der Code übertragen werden kann. Bei der Block-basierten Codierung wird ein Bild in Teile (Blöcke) unterteilt welche einzeln verarbeitet werden. Bei einer dritten Verfahrensklasse, die von der Block-basierten Codierung abgeleitet ist, ist es möglich die Zeitverzögerungen weiter zu reduzieren falls man einige Artefacte in Kauf nimmt:

c) Block-basierte Codierung auf der Grundlage von Teilbildern bei hohen Bildraten (frame rates).

Im folgenden werden die inhärenten algorithmischen Verzögerungen für diese drei algorithmischen Klassen untersucht.


Bild-basierte Codierung


Der Bildbasierten Codierung liegt die Annahme zugrunde, daß das gesamte Bild vor der Übertragung codiert werden muß. Dies trifft auf die meisten der "fortgeschrittenen" Algorithmen zu, z. B. auch auf den von Hötter [6] vorgeschlagenen Algorithmus, welcher einer der Kandidaten für eine Standardisierung der Bildcodierung bei sehr niedrigen Datenraten ist. Dieser Algorithmus bedient sich eines Analyse-/Syntheseansatzes, der die Segmentierung bewegter Objekte und von Regionen mit großem Prädiktionsfehler einschließt. Hierzu muß ein Bild vollständig analysiert werden, bevor die extrahierten Parameter übertragen werden können. Obwohl der Algorithmus in sequentielle Schritte unterteilt werden kann, kann nicht auf einfache Weise vorhergesehen werden, welche und wieviele Daten zur Durchführung der einzelnen Schritte benötigt werden.

Ferner wird angenommen, daß die Zeit, die zur Codierung oder Decodierung eines Bildes benötigt wird, im folgenden mit $c_p$ und $d_p$ bezeichnet, für alle Bilder gleich ist. Diese Annahme bedeutet keine Einschränkung für die Anwendbarkeit des erfindungsgemäßen Verfahrens sondern soll lediglich die Erklärung des der Erfindung zugrundeliegenden Prinzips vereinfachen. Um eine Verschwendung von Rechenleistung zu vermeiden werden $c_p$ und auch $d_p$ im allgemeinen im Bereich der Zeit zwischen zwei codierten Bildern (Frames) $1/f_s$ liegen, wobei $f_s$ die unterabgetastete Bildrate (frame rate) bezeichnet. Falls zur Verarbeitung eines Bildes wesentlich weniger Zeit benötigt würde, wäre die Hardware während der restlichen Zeit bis zur Codierung des nächsten Bildes unbeschäftigt.

Es wird angenommen, daß die Zeit $c_p$ zur Codierung eines Makroblocks (MB) und auch die Zeit $d_p$ zu seiner Decodierung konstant ist und nicht von der Art des Makroblocks abhängt. Diese Annahme dient lediglich zur Vereinfachung der Betrachtungen der Verzögerungszeiten im Zusammenhang mit der Darstellung der vorliegenden Erfindung, und entspricht einer Worst-case-Betrachtung.

Bei festgelegter Bildrate (Frame rate) ist die durchschnittliche Zeit die zur Codierung eines Makroblocks zur Verfügung steht bekannt. Sie hängt von der Zahl der Makroblöcke pro Bild $n_p$ und der Zeit zwischen zwei Bildern (frames) $1/f_s$ ab, die der höchstmöglichen Bildrate (frame rate) entspricht. Die zur Codierung oder Decodierung eines Makroblocks benötigte Zeit cb bzw. db muß kleiner sein als die zur Codierung eines Makroblocks zur Verfügung stehende Zeit. Wegen der Annahme einer effizienten Berechnung wird sie aber nahe bei diesem Wert liegen:

$$(1) \qquad c_b, \quad d_b < \frac{1}{f_s \cdot n_b}$$

Der Decoder muß warten bis der letzte Makroblock eines Bildes decodiert ist bevor das decodierte Bild wiedergegeben werden kann. Bevor die Decodierung des letzten Markoblocks beginnen kann müssen die Daten des vollständigen Makroblocks beim Empfänger angekommen sein. Deshalb entspricht die Gesamtverzögerung zwischen der Bildaufnahme, der Übertragung und der Wiedergabe am Empfänger

$$(2) \qquad D_b = c_b + t_p + d_b$$

wobei
db die Quellcodierungsverzögerung ohne Zwischenspeicherung (buffering) für block-basierte Verfahren, $c_b$ die Zeit für die Codierung eines Makroblocks mit

$$(3) \qquad c_b = \frac{1}{f_s \cdot n_b}$$

und $t_p$ die Zeit für die Übertragung der codierten Daten eines gesamten Bildes mit $t_p = 1/f_s$ ist. Ferner bedeuten $d_b$ die Zeit für die Decodierung eines Makroblocks mit

$$(4) \qquad d_b < \frac{1}{f_s \cdot n_b}$$

und $n_b$ die Zahl der Makroblöcke.

Unter der Annahme, daß die Zeit zur Codierung und Decodierung fast maximal gewählt werden um die Ruhezeit (Idletime) der Hardware für die Quellcodierung möglichst gering zu halten erhält man für die Gesamtverzögerung

$$(5) \qquad D_b \approx \frac{2}{n_b \cdot f_s} + \frac{1}{f_s}$$

Nimmt man als Beispiel einen Standardalgorithmus mit $n_b$ = 99, dann ergibt sich eine Gesamtverzögerung von 1.02/fs. Bei einer Bildrate (Frame rate) von 5 Hz ergibt sich damit eine Gesamtverzögerung von 204 ms. Diese Verzögerung ist subjektiv bemerkbar aber für Bildtelefonanwendungen akzeptabel [1].

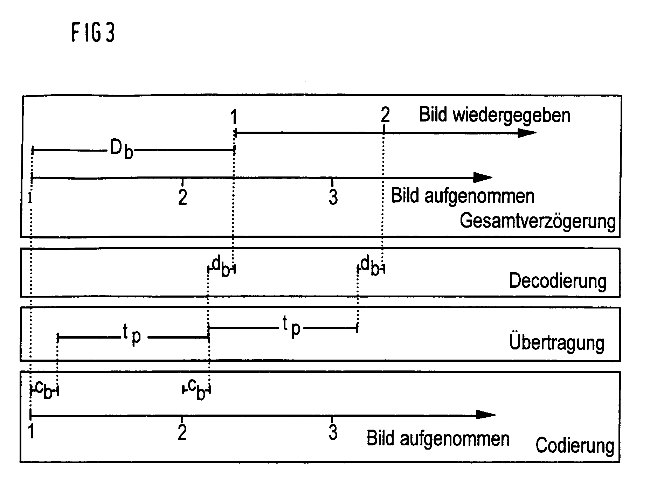

In Fig. 3 ist diese Situation schematisch dargestellt, wobei $c_b$ und $d_b$ nicht maßstäblich gewählt sind um sie schematisch deutlicher darstellen zu können.

Block-basierte Codierung unter Verwendung von Teilbildern

Kürzere Verzögerungen lassen sich grundsätzlich unter Verwendung höherer Bildraten (frame rates) erreichen. Bei niedrigratigen Algorithmen muß die Bildrate (Frame rate) aber niedriggehalten werden, um einen akzeptablen Ausgleich zwischen räumlicher und zeitlicher Auflösung zu gewährleisten. In diesem Abschnitt wird daher eine Methode beschrieben, welche trotz zeitlicher Unterabtastung zu Zeitverzögerungen führt, die nicht größer sind als bei einer hohen Bildfrequenz.

Diese Methode kann auf einfachste Weise als Vorverarbeitung der ursprünglichen Bildsequenz beschrieben werden. Die ursprüngliche Bildsequenz wird mit einer Bildrate (Frame rate) $f_s$ aufgenommen die ein Vielfaches der Unterabtastrate $f_s$ ist:

(6)     $f_h = n_f \cdot f_s$

Das Bild wird bei dieser Methode in $n_f$ gleich große Streifen unterteilt. Für jedes Bild der ursprünglichen Sequenz wird ein anderer Streifen auf das zu codierende Bild kopiert, so daß jeder einzelne Streifen mit der Rate $f_s$ aktualisiert wird. Das Bild kann wiedergegeben werden, sobald ein vollständiges Bild, d. h. ein neuer Streifen bei der hohen Bildsequenz, decodiert worden ist. Die Übertragungszeit für ein Bild $t'_p$ wird reduziert auf die Zeit zwischen zwei Bildern (frames) bei der hohen Bildfrequenz (Frame rate):

$$(7) \qquad t'_p = \frac{1}{f_h}$$

Die gesamte Zeitverzögerung ergibt sich so zu:

(8)     $D'_b = c_b + t'_p + d_b$

Hierbei ist $D'_b$ die durch die Quellcodierung ohne Zwischenspeicherung (buffering) bedingte Zeitverzögerung für blockbasierte Verfahren, $c_b$ die Zeit zur Codierung eines Macroblocks, $t'_p$ die Zeit zur Übertragung eines codierten Bildes, $d_b$ die Zeit zur Codierung eines Macroblocks, $n_b$ die Zahl der Macroblöcke, $n_f$ die Zahl der Teilbilder eines Bildes, $f_h$ die Bildrate (frame rate) der ursprünglichen, zu übertragenden Bildsequenz (typisch 25 Hz) und $f_s$ die Bildrate (frame rate) der zeitlich unterabgetasteten Bildsequenz (typisch 5 Hz).

Hierdurch ergibt sich der folgende Wert für die Gesamtzeitverzögerung bei der Block-basierten Codierung mit Teilbildern:

$$(9) \qquad D'_p = \frac{2}{f_s \cdot n_b} + \frac{1}{f_s \cdot n_f}$$

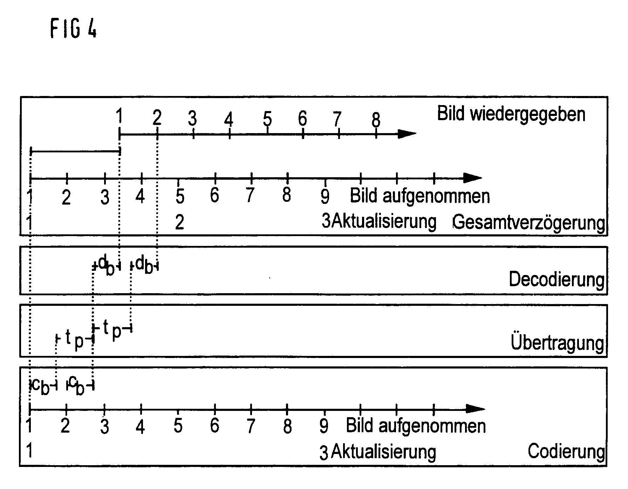

Legt man wiederum eine Standardalgorithmus mit $n_b$ = 99 und nf = 5 zugrunde, dann ergibt sich eine Verzögerungszeit von $0.22/f_s$. Bei einer unterabgetasteten Bildrate von 5 Hz ergeben sich also 44 ms. Eine derart geringe Zeitverzögerung wird nicht mehr bemerkt. Fig. 4 veranschaulicht die Verhältnisse in schematischer Weise, wobei cb und db in überzeichneten Maßstab dargestellt sind, um die Zeitverhältnisse besser verdeutlichen zu können.

Wegen der Unterteilung in Streifen besteht ein am Empfänger wiedergegebenes Bild aus nf Streifen von verschiedenen aufgenommenen Bildern zu verschiedenen Zeitpunkten innerhalb eines Aktualisierungszyklus. Die Aktualisierung der Streifen führt zu einer sichtbaren Unstetigkeit, welche das Bild entsprechend der Aktualisierung durchquert. Bei bestimmten Anwendungen kann ein derartiger Effekt unakzeptabel sein, so daß eine etwas höhere Zeitverzögerung bevorzugt in Kauf genommen wird. Ferner ist eine Bewegungskompensation aufgrund dieser Unstetigkeit nicht möglich wodurch das Signal/Rausch-Verhältnis reduziert wird.

[1] "Impact of Transmission Delay in Audiovisual Communications", CCITT SG XII, Geneva, March 1992

[2] P. Delogne, B. Macq, "Universal Variable Length Coding for an Integrated Approach to Image Coding", Ann. Telecomm (France), vol.46 no7-8, pp. 452-459, 8/1991

[3] R.J. Mulder, "DECT, a Universal Cordless Access System", Philips Telecommunication Review, vol.49 no.3, 9/1991

[4] "Error Correction for Video and Speech Coding", R2072/BOS/2.1.3/DR/L/014/b1, 1993

[5] M.J. Weinberger, A. Lempel, J. Ziv "On the Coding Delay of a General Coder" in Image and Text Compression, ed. J.A. Storer, Kluwer Academic Publishers, 1992

[6] M Hötter, "Object-Oriented Analysis-Synthesis Coding Based on Moving Two-Dimensional Objects" Signal Processing: Image Communications 2, pp 409-428, 1990

[7] "The MPEG Video Compression Algorithm: A Review" SPIE Vol.1452, Image Processing Algorithms and Techniques II, 1991

[8] "Video Codec for Audio-Visual Services at px64bit/s", CCITT Recommendation H.261

[9] "Reference Model 8 (RM8)", CCITT SGXV Specialist Group on Coding for Visual Telephony, 5/1989

[10] "Simulation Model for Very Low Bit rate Coding (SIM3)", COST 211ter (93)24, 3/1993

## Patentansprüche

1. Verfahren zur Minimierung der zeitlichen Verzögerung bei der Übertragung bewegter Bilder mit niedrigen Datenraten, bei dem
   - Teilbilder zu wechselnden Bildausschnitten eines zu übertragenden Bildbereichs auf Seiten eines Senders codiert, über einen Übertragungskanal übertragen und auf Seiten eines Empfängers decodiert werden;
   - übertragene Teilbilder nach ihrer Decodierung zur teilweisen Aktualisierung eines wiedergegebenen Bildes verwendet werden, indem diese Teilbilder in das wiedergegebene Bild entsprechend ihrem jeweiligen Bildausschnitt eingesetzt werden und dort früher übertragene, ältere Teilbilder ersetzen.

2. Verfahren zur Wiedergabe von bewegten Bildern, bei dem Teilbilder zu wechselnden Bildausschnitten eines wiederzugebenden Bildbereichs, welche auf Seiten eines Senders codiert und anschließend über einen Übertragungskanal übertragen wurden, auf Seiten eines Empfängers decodiert und zur teilweisen Aktualisierung eines wiedergegebenen Bildes verwendet werden, indem diese Teilbilder in das wiedergegebene Bild entsprechend ihrem jeweiligen Bildausschnitt eingesetzt werden und dort früher eingesetze, ältere Teilbilder ersetzen.

FIG 1

```
→ | Quell-      | → | Kanal-     | → | Kanal |  → | Kanal-     | → | Quell-De-  | →
    | Codierung |    | codierung |    |       |    | codierung |    | codierung |
```

FIG 2

Bild wiedergegeben     1

$D_p$

1          2          3          4    Gesamt-
                                       verzögerung
Bild aufgenommen

$d_p$     Decodierung

$t_p$     Übertragung

$c_p$

1          2          3  Bild aufgenommen    Codierung

FIG 3

## FIG 4

Bild wiedergegeben

Bild aufgenommen

Aktualisierung  Gesamtverzögerung

Decodierung

Übertragung

Bild aufgenommen

Aktualisierung  Codierung